# EUROPEAN PATENT APPLICATION

(11) **EP 2 290 034 A1**
(43) Date of publication of application: **02.03.2011**
(21) Application number: 09166484.7
(22) Date of filing: 27.07.2009
(51) Int. Cl.: C10G 3/00

(54) **Use of free fatty acids produced from bio-sourced oils and fats as the feedstock for a steamcracker**

(71) Applicant: Total Petrochemicals Research Feluy, 7181 Seneffe (Feluy) (BE)
(72) Inventor: Vermeiren, Walter, B -3530, Houthalen (BE); Vanrysselberghe, Valérie, 7181, Seneffe (Feluy) (BE)

(57) **Abstract**

Use of fatty acids produced from a complex mixture of natural occurring oils & fats and/or of triglycerides deriving from said complex mixture as the feedstock of a steamcracker, by mixing the fatty acids with steam in a steam/feedstock ratio of at least 0.2 kg per kg, a coil outlet temperature of at least 700 °C and an coil outlet pressure of at least 1.2 bara in order to obtain cracking products including bio-ethylene, bio-propylene, bio-butadiene,bio-isoprene, bio-cyclopentadiene and bio-piperylenes, bio-benzene, bio-toluene, bio-xylene and bio-gasoline.

## Description

### [Field of the invention]

The present invention relates to the production of bio-monomers in a steam cracker. The limited supply and increasing cost of crude oil and the need to reduce emission of fossil based carbon dioxides has prompted the search for alternative processes for producing hydrocarbon products. Made up of organic matter from living organisms, biomass is the world's leading renewable energy source.

### [Background of the invention]

The industrial chemistry of oils&fats is a mature technology, with decades of experience and continuous improvements over current practices. Natural oils&fats consist mainly of triglycerides and to some extent of free fatty acids (FFA). Many different types of triglycerides are produced in nature, either from vegetable and animal origin. Fatty acids in oils&fats are found esterified to glycerol (triacylglycerol). The acyl-group is a long-chain (C₁₂-C₂₂) hydrocarbon with a carboxyl-group at the end that is generally esterified with glycerol. Oils&fats are characterized by the chemical composition and structure of its fatty acid moiety. The fatty acid moiety can be saturated or contain one or more double bonds. Bulk properties of fats&oils are often specified as "saponification number", "Iodine Value", "unsaponification number". The "saponification number", which is expressed as grams of fat saponified by one mole of potassium hydroxide, is an indication of the average molecular weight and hence chain length. The "Iodine value", which is expressed as the weight percent of iodine consumed by the fat in a reaction with iodine monochloride, is an index of unsaturation.

Some typical sources of fats&oils and respective composition in fatty acids are given by way of example in Table 1 (From cottonseed oil to Linola oil: Vegetable oils in food technology: composition, properties and uses (F. Gunston);extraction, Analysis and utilization of a drying oil from Tetracarpidium Conophorum (MU. Akpuaka) in Bioressource Technology, 2000

From herring oil to tall oil: http://www.apag.org/oleo/fatsoils.pdf
(1) Thermoanalytical characterization of castor oil bio-distillates (M. Conceicao....) in Renewable and Sustainable Energy Review
(2) Physicochemical properties and composition of the non conventional pourghere oil from different areas in Benin (D. Kpoviessi....)

There are other potential feedstock available at this time, namely trap and sewage grease and other very high free fatty acid greases who's FFA can exceed 50%.

The main sources of fats&oils are palm and palm kernels, soybeans, rapeseed, sunflower, coconut, corn, animal fats, milk fats.

The content of free fatty acids in vegetable or animal fats&oils can change over time. Presence of water, heat and presence of enzymes, like lipase results in continuous hydrolysis and hence formation of more free fatty acids.

Potentially new sources of triglycerides will become available in the near future, namely those extracted from Jatropha and those produced by microalgues. These microalgues can accumulate more then 30 wt% of lipids on dry basis and they can be either cultivated in open basin, using atmospheric CO₂ or in closed photobioreactors. In the latter case, the required CO₂ can originate from the use of fossil hydrocarbons that are captured and injected into the photobioreactor. Main sources of fossil CO₂ are power stations, boilers used in refineries and steamcrackers, furnaces used to bring hydrocarbon streams at high temperature or to supply heat of reactions in hydrocarbon transformations in refineries and steamcrackers. In particular steamcracking furnaces produce a lot of CO₂. In order to enhance the CO₂ concentration in flue gases of these furnaces, techniques like oxycombustion, chemical looping or absorption of CO₂ can be employed. In oxycombustion, oxygen is extracted from air and this pure oxygen is used to burn hydrocarbon fuels as to obtain a stream only containing water and CO₂, allowing concentrating easily the CO₂ for storage or re-utilisation. In chemical looping, a solid material acts as oxygen-transfer agent from a re-oxidation zone where the reduced solid is re-oxidised with air into oxidised solid to a combustion zone, where the hydrocarbon fuel is burned with the oxidised solid and hence the effluent resulting from the combustion zone only contains water and CO₂. Absorption of CO₂ can be done with the help of a lean solvent that has a high preferential to absorb CO₂ under pressure and typically at low temperature and will release the CO₂ when depressurised and/or heated. Rectisol® and Selexol® are commercial available technologies to remove and concentrate CO₂.

US 2007/0175795 reports the contacting of a hydrocarbon and a triglyceride to form a mixture and contacting the mixture with a hydrotreating catalyst in a fixed bed reactor under conditions sufficient to produce a reaction product containing diesel boiling range hydrocarbons. The example demonstrates that the hydrotreatment of such mixture increases the cloud point and pour point of the resulting hydrocarbon mixture.

US 2004/0230085 reports a process for producing a hydrocarbon component of biological origin, **characterized in that** the process comprises at least two steps, the first one of which is a hydrodeoxygenation step and the second one is an isomerisation step. The resulting products have low solidification points and high cetane number and can be used as diesel or as solvent.

US 2007/0135669 reports the manufacture of branched saturated hydrocarbons, **characterized in that** a feedstock comprising unsaturated fatty acids or fatty acids esters with C1-C5 alcohols, or mixture thereof, is subjected to a skeletal isomerisation step followed by a deoxygenation step. The results demonstrate that very good cloud points can be obtained.

US 2007/0039240 reports on a process for cracking tallow into diesel fuel comprising: thermally cracking the tallow in a cracking vessel at a temperature of 260-371°C, at ambient pressure and in the absence of a catalyst to yield in part cracked hydrocarbons.

US 4554397 reports on a process for manufacturing olefins, comprising contacting a carboxylic acid or a carboxylic ester with a catalyst at a temperature of 200-400°C, wherein the catalyst simultaneously contains nickel and at least one metal from the group consisting of tin, germanium and lead.

It has been discovered that free fatty acids derived from natural oils&fats and triglycerides can be used as a direct feed of a steam cracker, offering therefore a new possibility of production of bio-monomers in the steam cracker.

### [description of the invention]

The subject-matter of the present invention is the use of fatty acids produced from a complex mixture of natural occurring oils & fats and/or of triglycerides deriving from said complex mixture as the feedstock of a steamcracker, by mixing the fatty acids with steam in a steam/feedstock ratio of at least 0.2 kg per kg, a coil outlet temperature of at least 700 °C and an coil outlet pressure of at least 1.2 bara in order to obtain cracking products including bio-ethylene, bio-propylene, bio-butadiene,bio-isoprene, bio-cyclopentadiene and bio-piperylenes, bio-benzene, bio-toluene, bio-xylene and bio-gasoline.

Said complex mixture of natural occurring oils&fats can be selected among vegetable and animal oils&fats, but preferentially inedible oils, animal fats, highly saturated oils, waste food oils, by-products of the refining of vegetable oils, and mixtures thereof. Specific examples of these oils&fats have been previously mentioned in the present specification.

Said free fatty acids can be the only feedstock of the steamcracker or they can be introduced in the steamcracker as mixed with at least a conventional feedstock selected among LPG, naphtha and gasoil.

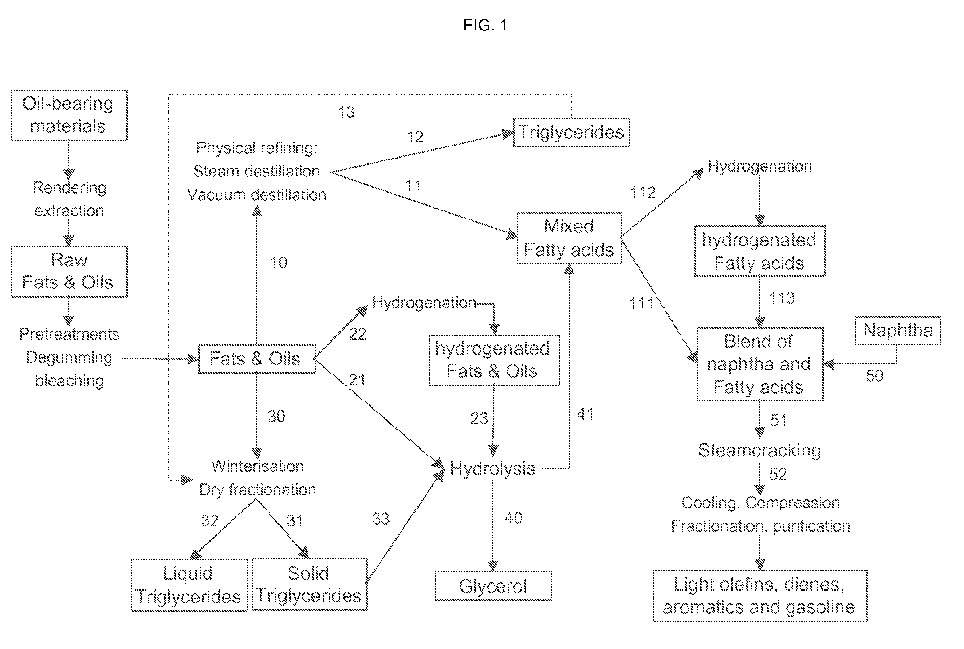

The different embodiments are represented in figure 1.

Fats & Oils are physically refined by vacuum distillation or steam distillation (10) to recover the mixed fatty acids (11) as overhead product and the triglycerides (12) as bottom product. These mixed fatty acids can be sent (111) to steamcracking or blended with LPG, naphtha or gasoil (50) and hence the blend is streamcracked (52). The products of the steamcracking are cooled, compressed, fractionated and purified (52). This results in light olefins (ethylene, propylene and butenes), dienes (butadiene, isoprene, (di)cyclopentadiene and piperylenes), aromatics (benzene, toluene and mixed xylenes) and gasoline as main components. The mixed fatty acids can further be improved as feedstock for steamcracking by hydrogenation of the remaining double bonds (112). The hydrogenated fatty acids are sent (113) to steamcracking.

Fats & Oils are hydrolysed (21) to produce mixed fatty acids (41) and glycerol (40). The mixed fatty acids can be further treated and used in steamcracking as described above. Before hydrolysis the fats & oils can be hydrogenated (22) to remove the remaining double bonds and subsequently sent (23) to the hydrolysis step. In this case, hydrogenation of mixed fatty acids will no more improve the quality of the fatty acids for steamcracking as they are already substantially comprised of saturated acyl-moieties.

A further optimisation of the usage of fats & oils comprises the segregation of the liquid fraction of fats & oils from the solid fraction. This is carried out by winterisation (controled cooling down) or dry fractionation (using a solvent) (30). This results in liquid triglycerides (32) and solid triglycerides (31). The liquid triglycerides can found high-end applications. The solid triglycerides, which are substantially comprised of saturated acyl-moieties, are sent to the hydrolysis step (33) where mixed fatty acids and glycerol are produced. The mixed fatty acids can be further treated and used in steamcracking as described above. In this case, hydrogenation of mixed fatty acids will no more improve the quality of the fatty acids for steamcracking as they are already substantially comprised of saturated acyl-moieties.

According to a first embodiment, said fatty acids have been obtained by steam distillation or vacuum distillation of said complex mixture, containing free fatty acids. The overhead of the distillation column contains the fatty acids and the triglycerides remain in the bottom product.

According to a second embodiment, said fatty acids have been obtained by an hydrolysis - which has been carried out thermally or catalytically- of triglycerides to make glycerol and fatty acids, followed by the removal of glycerol. The hydrolysis can be carried out either at atmospheric pressure with small amounts of sulfuric and sulfonic acids or at high pressure in an reactor (batch or continuous) with or without a small amount of catalyst (e.g., zinc oxide, lime or magnesium oxide) added to the water.

According to a third embodiment, said fatty acids have been obtained by hydrolysis of substantially solid triglyceride obtained by segregation, such as dry fractionation or winterization, of said triglycerides into a substantially liquid and substantially solid triglyceride fraction.

By "substantially saturated", we mean that less than 5% of the acyl-moieties contain double or multiple double bonds.

By "substantially solid", we mean that the triglycerides tend to solidify upon reducing its temperature down to about -10°C.

In order to further improve the quality of the fatty acids as feedstock for steamcracking, a pre-hydrogenation step can be carried out to convert the double bonds into saturated bonds. This can be done by means of hydrogen in presence of catalysts containing Nickel, Cobalt, Platinum, Palladium, cobalt-molybdenum-sulphides, nickel-molybdenum-sulphides, nickel-sulphides, cobalt-sulphides dispersed on carriers like silica, alumina, zirconia, carbon, magnesium oxide, zinc oxide or spinels of the latter. Also bulk nickel of cobalt catalyst of the Raney-type can be used. This pre-hydrogenation step can be performed on the triglycerides in case these are used as the raw feedstock of the process or can be performed on the fatty acids obtained from the raw feedstock.

Moreover, the present invention relates to a process for steam cracking a feedstock as defined above, wherein said feedstock is mixed with steam and the mixture is heated up to a temperature of 750-900°C.

### STEAMCRACKING

Steamcrackers are complex industrial facilities that can be divided into three main zones, each of which has several types of equipment with very specific functions: (i) the hot zone including: pyrolysis or cracking furnaces, quench exchanger and quench ring, the columns of the hot separation train (ii) the compression zone including: a cracked gas compressor, purification and separation columns, dryers and (iii) the cold zone including: the cold box, de-methaniser, fractionating columns of the cold separation train, the C₂ and C₃ converters, the gasoline hydrostabilization reactor Hydrocarbon cracking is carried out in tubular reactors in direct-fired heaters (furnaces). Various tube sizes and configurations can be used, such as coiled tube, U-tube, or straight tube layouts. Tube diameters range from 1 to 4 inches. Each furnace consists of a convection zone in which the waste heat is recovered and a radiant zone in which pyrolysis takes place. The feedstock-steam mixture is preheated in the convection zone to about 530-650°C or the feedstock is preheated in the convection section and subsequently mixed with dilution steam before it flows over to the radiant zone, where pyrolysis takes place at temperatures varying from 750 to 950°C and residence times from 0.05 to 0.5 second, depending on the feedstock type and the cracking severity desired. In an advantageous embodiment the residence time is from 0.05 to 0.15 second. The steam/feedstock (the steam/[hydrocarbon feedstock]) weight ratio is between 0.2 and 1.0 kg/kg, preferentially between 0.3 and 0.5 kg/kg. In an advantageous embodiment the steam/feedstock weight ratio is between 0.2 and 0.45 and preferably between 0.3 and 0.4. For steamcracking furnaces, the severity can be modulated by: temperature, residence time, total pressure and partial pressure of hydrocarbons. In general the ethylene yield increases with the temperature while the yield of propylene decreases. At high temperatures, propylene is cracked and hence contributes to more ethylene yield. The increase in severity thus obtained leads to a moderate decrease in selectivity and a substantial decrease of the ratio C₃=/C₂=. So high severity operation favors ethylene, while low severity operation favors propylene production. The residence time of the feed in the coil and the temperature are to be considered together. Rate of coke formation will determine maximum acceptable severity. A lower operating pressure results in easier light olefins formation and reduced coke formation. The lowest pressure possible is accomplished by (i) maintaining the output pressure of the coils as close as possible to atmospheric pressure at the suction of the cracked gas compressor (ii) reducing the pressure of the hydrocarbons by dilution with steam (which has a substantial influence on slowing down coke formation). The steam/feed ratio must be maintained at a level sufficient to limit coke formation.

Effluent from the pyrolysis furnaces contains unreacted feedstock, desired olefins (mainly ethylene and propylene), hydrogen, methane, a mixture of C₄'s (primarily isobutylene and butadiene), pyrolysis gasoline (aromatics in the C₆ to C₈ range), ethane, propane, di-olefins (acetylene, methyl acetylene, propadiene), and heavier hydrocarbons that boil in the temperature range of fuel oil. This cracked gas is rapidly quenched to 338-510°C to stop the pyrolysis reactions, minimize consecutive reactions and to recover the sensible heat in the gas by generating high-pressure steam in parallel transfer-line heat exchangers (TLE's). In gaseous feedstock based plants, the TLE-quenched gas stream flows forward to a direct water quench tower, where the gas is cooled further with recirculating cold water. In liquid feedstock based plants, a prefractionator precedes the water quench tower to condense and separate the fuel oil fraction from the cracked gas. In both types of plants, the major portions of the dilution steam and heavy gasoline in the cracked gas are condensed in the water quench tower at 35-40°C. The water-quench gas is subsequently compressed to about 25-35 Bars in 4 or 5 stages. Between compression stages, the condensed water and light gasoline are removed, and the cracked gas is washed with a caustic solution or with a regenerative amine solution, followed by a caustic solution, to remove acid gases (CO₂, H₂S and SO₂). The compressed cracked gas is dried with a desiccant and cooled with propylene and ethylene refrigerants to cryogenic temperatures for the subsequent product fractionation: Front-end demethanization, Front-end depropanization or Front-end deethanization.

In a front-end demethanization configuration, tail gases (CO, H₂, and CH₄) are separated from the C₂+ components first by de-methanization column at about 30 bars. The bottom product flows to the de-ethanization, of which the overhead product is treated in the acetylene hydrogenation unit and further fractionated in the C₂ splitting column. The bottom product of the de-ethanization goes to the de-propanization, of which the overhead product is treated in the methyl acetylene/propadiene hydrogenation unit and further fractionated in the C₃ splitting column. The bottom product of the de-propaniser goes to the de-butanization where the C₄'s are separated from the pyrolysis gasoline fraction. In this separation sequence, the H₂ required for hydrogenation is externally added to C₂ and C₃ streams. The required H₂ is typically recovered from the tail gas by methanation of the residual CO and eventually further concentrated in a pressure swing adsorption unit. Front-end de-propanization configuration is used typically in steamcrackers based on gaseous feedstock. In this configuration, after removing the acid gases at the end of the third compression stage, the C₃ and lighter components are separated from the C₄₊ by de-propanization. The de-propanizer C₃- overhead is compressed by a fourth stage to about 30-35 bars. The acetylenes and/or dienes in the C₃-cut are catalytically hydrogenated with H₂ still present in the stream. Following hydrogenation, the light gas stream is de-methanized, de-ethanized and C₂ split. The bottom product of the de-ethanization can eventually be C₃ split. In an alternative configuration, the C₃- overhead is first de-ethanised and the C₂- treated as described above while the C₃'s are treated in the C₃ acetylene/diene hydrogenation unit and C₃ split. The C₄+ de-propanizer bottom is de-butanized to separate C_{4'}s from pyrolysis gasoline.

There are two versions of the front-end de-ethanization separation sequence. The product separation sequence is identical to the front-end de-methanization and front-end depropanization separation sequence to the third compression stage. The gas is de-ethanized first at about 27 bars to separate C₂- components from C₃+ components. The overhead C₂- stream flows to a catalytic hydrogenation unit, where acetylene in the stream is selectively hydrogenated. The hydrogenated stream is chilled to cryogenic temperatures and de-methanized at low pressure of about 9-10 bars to strip off tail gases. The C₂ bottom stream is split to produce an overhead ethylene product and an ethane bottom stream for recycle. In parallel, the C₃+ bottom stream from the front-end de-ethanizer undergoes further product separation in a de-propaniser, of which the overhead product is treated in the methyl acetylene/propadiene hydrogenation unit and further fractionated in the C₃ splitting column. The bottom product of the de-propaniser goes to the de-butanization where the C_{4'}s are separated from the pyrolysis gasoline fraction. In the more recent version of the front-end de-ethanization separation configuration, the cracked gas is caustic washed after three compression stages, pre-chilled and is then de-ethanized at about 16-18 bars top pressure. The net overhead stream (C₂-) is compressed further in the next stage to about 35-37 bars before it passes to a catalytic converter to hydrogenate acetylene, with hydrogen still contained in the stream. Following hydrogenation, the stream is chilled and de-methanized to strip off the tail gases from the C₂ bottom stream. The C_{2'}s are split in a low pressure column operating at 9-10 bars pressure, instead of 19-24 bars customarily employed in high pressure C₂ splitters that use a propylene refrigerant to condense reflux for the column. For the low-pressure C₂ splitter separation scheme, the overhead cooling and compression system is integrated into a heat-pump, open-cycle ethylene refrigeration circuit. The ethylene product becomes a purged stream of the ethylene refrigeration recirculation system.

The ethane bottom product of the C₂ splitter is recycled back to steam cracking. Propane may also be re-cracked, depending on its market value. Recycle steam cracking is accomplished in two or more dedicated pyrolysis furnaces to assure that the plant continues operating while one of the recycle furnaces is being decoked.

Many other variations exist of the above-described configurations, in particular in the way the undesired acetylene/dienes are removed from the ethylene and propylene cuts.

### Examples:

Coconut and palm fatty acids (see table 2 for composition) have been obtained according to hydrolysis and steamcracked.

**Table 2**

| **COMPOSITION IN WT%** | | | | |
|---|---|---|---|---|
| **Systematic name** | **Trivial name** | **Shorthand designation** | **R0625 COCONUT** | **R0454 PALM** |
| octanoic | caprylic | 8:0 | 7,3 | |
| decanoic | capric | 10:0 | 6,8 | |
| dodecanoic | lauric | 12:0 | 48,5 | 0,2 |
| tetradecanoic | myristic | 14:0 | 18,1 | 1,1 |
| hexadecanoic | palmitic | 16:0 | 9,0 | 46,5 |
| octadecanoic | stearic | 18:0 | 1,2 | 4,5 |
| 9-octadecenoic | oleic | 18:1 | 7,2 | 38,8 |
| 9,12-octadecadienoic | linoleic | 18:2 | 1,3 | 8,3 |
| eicosanoic | arachidic | 20:0 | | 0,3 |
| **ACID VALUE** | **MG KOH / G** | | **271** | **208,5** |
| **MOLECULAR WEIGHT** | **G / MOLE** | | **206,6** | **268,6** |

### Example 1:

Coconut fatty acids have been streamcracked in a pilot unit at different temperatures. Table 3 provides the detailed results.

### Example 2:

Palm fatty acids have been streamcracked in a pilot unit at different temperatures. Table 4 provides the detailed results.

### Comparative example 3:

A typical naphtha steamcracking has been simulated with a commercial software package. The assumed composition is given in table 5. The detailed results are given in table 6.

**Table 5**

| WT% | NPAR | IPAR | OLEFINS | NAP | AROM | TOTAL |
|---|---|---|---|---|---|---|
| 4 | 2,8 | 0,34 | 0,27 | 0.00 | 0.00 | 3,41 |
| 5 | 15,12 | 11,07 | 3,87 | 3,44 | 0.00 | 33,5 |
| 6 | 12,46 | 15,27 | 0,29 | 7,59 | 3,08 | 38,69 |
| 7 | 3,35 | 6,7 | 0,02 | 5,06 | 1,39 | 16,52 |
| 8 | 0,98 | 1,43 | 0.00 | 1,51 | 0,77 | 4,69 |
| 9 | 0,54 | 0,91 | 0.00 | 0,69 | 0,32 | 2,46 |
| 10 | 0,12 | 0,52 | 0.0 | 0 | 0,04 | 0,68 |
| 11 | 0 | 0,04 | 0.0 | 0 | 0 | 0,04 |
| TOTAL | 35,37 | 36,28 | 4,45 | 18,29 | 5,6 | 100,0 |

The examples 1 and 2 indicate that fatty acids from natural resources can be steamcracked as pure feedstock. Compared to conventional naphtha, higher ethylene/propylene ratios can be obtained at conditions where less methane is made when using the fatty acids. Although more butadiene can be produced from fatty acids compared to naphtha.

### Example 4:

Coconut fatty acids have been blended (5 wt%) with naphtha and steamcracked. The composition of the used naphtha is given in table 7. The detailed results are given in table 8.

**Table 7**

| WT% | NPAR | IPAR | OLEFINS | NAP | AROM | TOTAL |
|---|---|---|---|---|---|---|
| 3 | 0.00 | 0.00 | 0.00 | 0.00 | 0.00 | 0.00 |
| 4 | 1.84 | 0.11 | 0.00 | 0.00 | 0.00 | 1.96 |
| 5 | 17.47 | 13.57 | 0.23 | 1.51 | 0.00 | 32.78 |
| 6 | 16.33 | 19.88 | 0.10 | 8.21 | 2.36 | 46.87 |
| 7 | 3.46 | 8.82 | 0.00 | 4.35 | 1.04 | 17.67 |
| 8 | 0.04 | 0.37 | 0.00 | 0.29 | 0.00 | 0.70 |
| 9 | 0.00 | 0.00 | 0.00 | 0.00 | 0.00 | 0.00 |
| TOTAL | 39.15 | 42.75 | 0.32 | 14.36 | 3.40 | 100 |

### Comparative example 5:

The naphtha of table 7 has been steamcracked. The detailed results are given in table 8.

**Table 3**

| | | **Example 1** | | | |
|---|---|---|---|---|---|
| **OPERATING CONDITIONS** | | **R0625 COCONUT** | | | |
| STEAM TO OIL RATIO | KG/KG | 0,40 | 0,40 | 0,40 | 0,40 |
| COIL OUTLET PRESSURE | BARA | 1,70 | 1,70 | 1,70 | 1,70 |
| RESIDENCE TIME PILOT | MS | | | | |
| INLET TEMPERATURE | °C | 550 | 550 | 550 | 550 |
| OUTLET TEMPERATURE | °C | 760 | 780 | 800 | 820 |
| **PRODUCT YIELDS** | **wt%** | | | | |
| CO | | 3,12 | 3,70 | 4,27 | 4,74 |
| CO2 | | 6,47 | 8,23 | 8,99 | 9,87 |
| HYDROGEN | | 0,24 | 0,30 | 0,37 | 0,44 |
| METHANE | | 4,94 | 6,00 | 7,00 | 8,03 |
| ACETYLENE | | 0,13 | 0,20 | 0,29 | 0,39 |
| ETHYLENE | | 23,61 | 26,82 | 28,79 | 29,96 |
| ETHANE | | 3,04 | 3,14 | 3,13 | 3,03 |
| MAPD | | 0,11 | 0,17 | 0,24 | 0,30 |
| PROPYLENE | | 13,41 | 13,84 | 13,47 | 12,21 |
| PROPANE | | 0,37 | 0,37 | 0,37 | 0,33 |
| 1,3-BUTADIENE | | 4,76 | 5,19 | 5,28 | 5,00 |
| 1-BUTENE | | 3,77 | 3,11 | 2,05 | 1,07 |
| ISOBUTENE | | 0,24 | 0,15 | 0,13 | 0,12 |
| 2-BUTENE | | 0,60 | 0,65 | 0,63 | 0,53 |
| ISOBUTANE | | 0,01 | 0,01 | 0,01 | 0,01 |
| NBUTANE | | 0,10 | 0,09 | 0,08 | 0,05 |
| OTHER C4 | | 0,02 | 0,03 | 0,03 | 0,04 |
| C5 CUT | | 4,65 | 3,93 | 3,39 | 3,02 |
| C6 NONARO | | 2,47 | 1,60 | 1,22 | 0,97 |
| BENZENE | | 1,97 | 2,91 | 3,88 | 4,98 |
| C7 NONARO | | 1,36 | 0,61 | 0,35 | 0,25 |
| TOLUENE | | 0,74 | 0,98 | 1,15 | 1,40 |
| C8 NONARO | | 0,63 | 0,20 | 0,17 | 0,13 |
| ETHYLBENZENE/XYLENES | | 0,27 | 0,32 | 0,31 | 0,34 |
| STYRENE | | 0,27 | 0,39 | 0,50 | 0,72 |
| C9 NONARO | | 0,25 | 0,13 | 0,07 | 0,03 |
| C9 ARO | | 0,41 | 0,47 | 0,54 | 0,72 |
| C10+ | | 9,90 | 5,38 | 3,57 | 3,00 |
| AQUEOUS PHASE | | 12,15 | 11,10 | 9,75 | 8,34 |
| C4-CUT | | 64,93 | 71,98 | 75,10 | 76,11 |
| C5+ CUT | | 22,92 | 16,91 | 15,15 | 15,55 |
| **C3H6 + C2H4** | **wt%** | 37,01 | 40,66 | 42,26 | 42,17 |
| **C3H6/C2H4** | **wt/wt** | 0,568 | 0,516 | 0,468 | 0,407 |
| **C3H6*C2H4/C2H6^2** | **wt²/wt²** | 34,4 | 37,6 | 39,6 | 39,8 |

**Table 4**

| | | **Example 2** | | | |
|---|---|---|---|---|---|
| **OPERATING CONDITIONS** | | **R0454 PALM** | | | |
| STEAM TO OIL RATIO | KG/KG | 0,40 | 0,40 | 0,40 | 0,40 |
| COIL OUTLET PRESSURE | BARA | 1,70 | 1,70 | 1,70 | 1,70 |
| RESIDENCE TIME PILOT | MS | | | | |
| INLET TEMPERATURE | °C | 550 | 550 | 550 | 550 |
| OUTLET TEMPERATURE | °C | 760 | 780 | 800 | 820 |
| **PRODUCT YIELDS** | **wt%** | | | | |
| CO | | 2,72 | 3,02 | 3,32 | 3,63 |
| CO2 | | 5,99 | 7,31 | 7,72 | 8,20 |
| HYDROGEN | | 0,26 | 0,32 | 0,38 | 0,45 |
| METHANE | | 5,93 | 6,91 | 7,70 | 8,81 |
| ACETYLENE | | 0,15 | 0,20 | 0,27 | 0,36 |
| ETHYLENE | | 24,07 | 26,08 | 26,94 | 27,91 |
| ETHANE | | 3,63 | 3,61 | 3,53 | 3,46 |
| MAPD | | 0,13 | 0,18 | 0,23 | 0,29 |
| PROPYLENE | | 13,61 | 13,37 | 12,78 | 11,59 |
| PROPANE | | 0,48 | 0,45 | 0,43 | 0,39 |
| 1,3-BUTADIENE | | 5,86 | 5,80 | 5,64 | 5,12 |
| 1-BUTENE | | 3,53 | 2,51 | 1,59 | 0,77 |
| ISOBUTENE | | 0,24 | 0,20 | 0,18 | 0,17 |
| 2-BUTENE | | 0,87 | 0,83 | 0,75 | 0,59 |
| ISOBUTANE | | 0,01 | 0,01 | 0,01 | 0,01 |
| NBUTANE | | 0,12 | 0,10 | 0,08 | 0,04 |
| OTHER C4 | | 0,02 | 0,03 | 0,04 | 0,06 |
| C5 CUT | | 5,60 | 4,67 | 3,93 | 3,32 |
| C6 NONARO | | 2,27 | 1,69 | 1,23 | 0,93 |
| BENZENE | | 4,56 | 5,80 | 6,78 | 7,48 |
| C7 NONARO | | 0,83 | 0,46 | 0,30 | 0,17 |
| TOLUENE | | 1,94 | 2,20 | 2,37 | 2,40 |
| C8 NONARO | | 0,35 | 0,18 | 0,13 | 0,10 |
| ETHYLBENZENE/XYLENES | | 0,63 | 0,67 | 0,63 | 0,56 |
| STYRENE | | 0,70 | 0,83 | 1,03 | 1,19 |
| C9 NONARO | | 0,19 | 0,07 | 0,03 | 0,02 |
| C9ARO | | 0,90 | 0,95 | 1,10 | 1,19 |
| C10+ | | 5,19 | 3,27 | 3,42 | 3,98 |
| AQUEOUS PHASE | | 9,22 | 8,28 | 7,46 | 6,81 |
| C4- CUT | | 67,61 | 70,93 | 71,59 | 71,83 |
| C5+ CUT | | 23,17 | 20,79 | 20,95 | 21,36 |
| **C3H6 + C2H4** | **wt%** | 37,68 | 39,45 | 39,73 | 39,50 |
| **C3H6/C2H4** | **wt/wt** | 0,565 | 0,513 | 0,474 | 0,415 |
| **C3H6*C2H4/C2H6^2** | **wt²/wt²** | 24,9 | 26,7 | 27,6 | 27,1 |

**Table 6**

| | | **Comparitive Example** | | | |
|---|---|---|---|---|---|
| **OPERATING CONDITIONS** | | **NAPHTHA** | | | |
| STEAM TO OIL RATIO | KG/KG | 0,40 | 0,40 | 0,40 | 0,40 |
| COIL OUTLET PRESSURE | BARA | 1,70 | 1,70 | 1,70 | 1,70 |
| RESIDENCE TIME PILOT | MS | 380 | 375 | 370 | 365 |
| INLET TEMPERATURE | °C | 550 | 550 | 550 | 550 |
| OUTLET TEMPERATURE | °C | 760 | 780 | 800 | 820 |
| **PRODUCT YIELDS** | **wt%** | | | | |
| CO | | 0,01 | 0,02 | 0,03 | 0,05 |
| CO2 | | 0,00 | 0,00 | 0,00 | 0,00 |
| HYDROGEN | | 0,42 | 0,56 | 0,69 | 0,83 |
| METHANE | | 6,84 | 9,17 | 11,48 | 13,75 |
| ACETYLENE | | 0,04 | 0,08 | 0,15 | 0,25 |
| ETHYLENE | | 13,52 | 17,97 | 22,00 | 25,51 |
| ETHANE | | 2,88 | 3,23 | 3,43 | 3,50 |
| MAPD | | 0,15 | 0,26 | 0,39 | 0,55 |
| PROPYLENE | | 13,76 | 16,26 | 17,40 | 17,06 |
| PROPANE | | 0,43 | 0,47 | 0,48 | 0,45 |
| 1,3-BUTADIENE | | 3,02 | 3,88 | 4,52 | 4,85 |
| 1-BUTENE | | 2,98 | 2,93 | 2,54 | 1,94 |
| ISOBUTENE | | 3,81 | 4,10 | 3,95 | 3,41 |
| 2-BUTENE | | 1,76 | 1,74 | 1,52 | 1,17 |
| ISOBUTANE | | 0,24 | 0,20 | 0,15 | 0,11 |
| NBUTANE | | 1,67 | 1,30 | 0,95 | 0,63 |
| OTHER C4 | | 0,00 | 0,01 | 0,02 | 0,03 |
| C5 CUT | | 19,51 | 14,99 | 10,81 | 7,13 |
| C6 NONARO | | 14,71 | 9,65 | 5,74 | 2,97 |
| BENZENE | | 3,77 | 4,55 | 5,68 | 7,10 |
| C7 NONARO | | 5,13 | 3,10 | 1,67 | 0,76 |
| TOLUENE | | 1,76 | 2,09 | 2,50 | 2,91 |
| C8 NONARO | | 1,10 | 0,58 | 0,26 | 0,09 |
| ETHYLBENZENE/XYLENES | | 0,77 | 0,80 | 0,82 | 0,83 |
| STYRENE | | 0,14 | 0,25 | 0,41 | 0,65 |
| C9 NONARO | | 0,35 | 0,16 | 0,06 | 0,02 |
| C9 ARO | | 0,33 | 0,40 | 0,50 | 0,62 |
| C10+ | | 0,94 | 1,26 | 1,85 | 2,80 |
| AQUEOUS PHASE | | 0,00 | 0,00 | 0,00 | 0,00 |
| C4- CUT | | 51,51 | 62,17 | 69,71 | 74,11 |
| C5+CUT | | 48,49 | 37,82 | 30,29 | 25,89 |
| **C3H6 + C2H4** | **wt%** | 27,28 | 34,23 | 39,40 | 42,57 |
| **C3H6/C2H4** | **wt/wt** | 1,017 | 0,905 | 0,791 | 0,669 |
| **C3H6*C2H4/C2H6^2** | **wt²/wt²** | 22,4 | 28,0 | 32,5 | 35,4 |

**Table 8**

| | | **Example 4** | | **Comparative example 5** |
|---|---|---|---|---|
| **OPERATING CONDITIONS** | | **5 WT% FATTY ACID IN NAPHTHA** | | **PURE NAPHTHA** |
| STEAM TO OIL RATIO | KG/KG | 0,40 | 0,40 | 0,40 |
| COIL OUTLET PRESSURE | BARA | 1,70 | 1,70 | 1,70 |
| RESIDENCE TIME | MS | | | 360 |
| INLET TEMPERATURE | °C | 550 | 550 | 550 |
| OUTLET TEMPERATURE | °C | 820 | 835 | 835 |
| **PRODUCT YIELDS** | **wt%** | | | |
| CO | | 0,19 | 0,20 | 0,05 |
| CO2 | | 0,49 | 0,53 | 0,02 |
| HYDROGEN | | 0,81 | 0,92 | 0,95 |
| METHANE | | 14,24 | 16,14 | 16,43 |
| ACETYLENE | | 0,30 | 0,41 | 0,41 |
| ETHYLENE | | 26,35 | 28,66 | 28,56 |
| ETHANE | | 4,15 | 4,11 | 4,15 |
| MAPD | | 0,63 | 0,75 | 0,77 |
| PROPYLENE | | 17,52 | 16,37 | 16,72 |
| PROPANE | | 0,56 | 0,51 | 0,52 |
| 1,3-BUTADIENE | | 4,45 | 4,39 | 4,37 |
| 1-BUTENE | | 1,84 | 1,23 | 1,30 |
| ISOBUTENE | | 3,41 | 2,83 | 2,99 |
| 2-BUTENE | | 1,25 | 0,93 | 0,97 |
| ISOBUTANE | | 0,06 | 0,05 | 0,05 |
| NBUTANE | | 0,30 | 0,16 | 0,17 |
| OTHER C4 | | 0,15 | 0,16 | 0,17 |
| C5 CUT | | 6,75 | 4,99 | 5,13 |
| C6 NONARO | | 3,54 | 2,11 | 2,24 |
| BENZENE | | 6,29 | 7,10 | 6,99 |
| C7 NONARO | | 0,73 | 0,41 | 0,44 |
| TOLUENE | | 2,21 | 2,35 | 2,37 |
| C8 NONARO | | 0,13 | 0,11 | 0,11 |
| ETHYLBENZENE/XYLENES | | 0,45 | 0,45 | 0,46 |
| STYRENE | | 0,63 | 0,83 | 0,81 |
| C9 NONARO | | 0,05 | 0,04 | 0,05 |
| C9 ARO | | 0,66 | 0,82 | 0,79 |
| C10+ | | 1,53 | 2,13 | 2,01 |
| AQUEOUS PHASE | | 0,34 | 0,32 | 0,00 |
| C4- CUT | | 76,70 | 78,35 | 78,59 |
| C5+ CUT | | 22,96 | 21,32 | 21,41 |
| **C3H6 + C2H4** | **wt%** | 43,87 | 45,03 | 45,28 |
| **C3H6/C2H4** | **wt/wt** | 0,66 | 0,57 | 0,59 |
| **C3H6*C2H4/C2H6^2** | **wt²/wt²** | 26,8 | 27,8 | 27,8 |

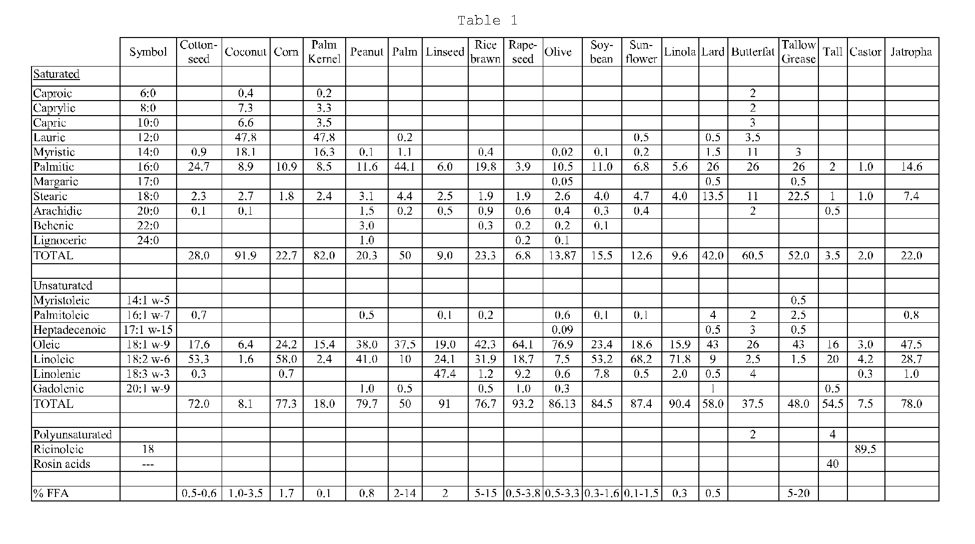

## Claims

1. Use of fatty acids produced from a complex mixture of natural occurring oils & fats and/or of triglycerides deriving from said complex mixture as the feedstock of a steamcracker, by mixing the fatty acids with steam in a steam/feedstock ratio of at least 0.2 kg per kg, a coil outlet temperature of at least 700 °C and an coil outlet pressure of at least 1.2 bara in order to obtain cracking products including bio-ethylene, bio-propylene, bio-butadiene,bio-isoprene, bio-cyclopentadiene and bio-piperylenes, bio-benzene, bio-toluene, bio-xylene and bio-gasoline.

2. Use according to Claim 1, wherein said complex mixture of natural occurring oils & fats is selected among inedible oils, animal fats, highly saturated oils, waste food oils, by-products of the refining of vegetable oils, and mixtures thereof.

3. Use according to Claim 1 or 2, wherein said fatty acids are the only feedstock of the steamcracker.

4. Use according to Claim 1 or 2, wherein said fatty acids are introduced in the steamcracker as mixed with at least a conventional feedstock selected among LPG, naphtha and gasoil.

5. Use according to anyone of Claims 1 to 4, wherein said fatty acids have been obtained by steam distillation or vacuum distillation of said complex mixture.

6. Use according to anyone of Claims 1 to 4 wherein said fatty acids have been obtained by hydrolysis of triglycerides to make glycerol and fatty acids and removal of glycerol.

7. Use according to Claim 6 wherein the hydrolysis has been carried out thermally.

8. Use according to Claim 6 wherein the hydrolysis has been carried out catalytically.

9. Use according to anyone of Claims 6 to 8, wherein said triglycerides consist substantially of the solid triglycerides fraction, obtained by segregation of fats & oils into a substantially liquid triglyceride fraction and a substantially solid triglyceride fraction by winterisation or dry fractionation and the solid triglyceride fraction is hydrolysed into fatty acids and glycerol and the glycerol removed.

10. use according to anyone of claims 1 to 8, wherein the fatty acids are hydrogenated to obtain substantially saturated fatty acids.

11. use according anyone of claims 1 to 8, wherein the triglycerides are hydrogenated to obtain triglycerides with substantially saturated fatty acids moieties.

12. Process for steam cracking a feedstock as defined in anyone of the preceding claims, wherein said feedstock is mixed with steam and the mixture is heated up to a temperature of 750-900°C at a pressure of 1.3-2.0 bara.

13. Process according to any one of the preceding claims wherein in the steamcracking process the hydrocarbon feedstock is mixed with steam in a ratio of 0.3 to 0.5 kg steam per kg hydrocarbon feedstock.

14. Process according to claim 13 wherein in the steamcracking process the hydrocarbon feedstock is mixed with steam in a ratio of 0.3 to 0.45 kg steam per kg hydrocarbon feedstock.

15. The process of claim 14 wherein the hydrocarbon feedstock is mixed with steam in a ratio of 0.3 to 0.4 kg steam per kg hydrocarbon feedstock.

16. The process for steam cracking a feedstock as defined in any one of Claims 12 to 15, wherein the mixture is heated up to a temperature of 750-950°C at a residence time of 0.05 to 0.5 seconds.

17. The process for steam cracking a feedstock as defined in claim 16, wherein the mixture is heated up to a temperature of 750-950°C at a residence time of 0.05 to 0.15 seconds.
